# EUROPEAN PATENT SPECIFICATION

(11) **EP 2 950 051 B1**
(45) Date of publication and mention of the grant of the patent: **09.08.2017**
(21) Application number: 15169244.9
(22) Date of filing: 26.05.2015
(51) Int. Cl.: G01D 3/036, B62D 15/02, B62D 5/04, G01D 5/14

(54) **SENSOR MOUNTING BOARD**
SENSORMONTAGEPLATTE
CARTE DE MONTAGE DE CAPTEUR

(30) Priority: 28.05.2014 JP 2014110162
(43) Date of publication of application: 02.12.2015
(73) Proprietor: AISIN SEIKI KABUSHIKI KAISHA, Kariya-shi, Aichi-ken, 448-8650 (JP)
(72) Inventor: TODA, Kinichi, Kariya-shi, Aichi-ken, 448-8650 (JP); AKAGI, Yusuke, Kairya-shi, Aichi-ken, 448-8650 (JP); SATO, Teruhide, Kairya-shi, Aichi-ken, 448-8650 (JP); OJIMA, Koki, Kariya-shi, Aichi-ken, 448-8650 (JP)
(74) Representative: Winter, Brandl, Fürniss, Hübner, Röss, Kaiser, Polte - Partnerschaft mbB

(56) References cited:
- JP-A- 2000 341 954
- JP-A- 2012 034 149
- US-B1- 6 201 326

## Description

### TECHNICAL FIELD

This disclosure relates to a sensor mounting board on which a plurality of elements and a sensor are mounted on an electronic circuit board. In addition, this disclosure relates to a displacement detection device which includes the sensor mounting board, is mounted on a linear motion mechanism which converts rotary motion of a nut member to linear motion of a rod, and detects displacement in the axial direction of the rod, and further relates to a rear wheel steering apparatus for a vehicle which includes the displacement detection device, is interposed in a suspension mechanism which supports the rear wheels of the vehicle, and steers the rear wheels.

### BACKGROUND DISCUSSION

Following the trend of device miniaturization in recent times, a sensor mounting board on which a sensor is directly mounted with respect to an electronic circuit board where a plurality of elements are mounted has attracted attention. Thereby, it is anticipated that not only attachment space is reduced, but also costs are reduced by omission of a wire harness or the like, but, for example, reduction of magnetic field disturbance is essential with respect to a magnetosensitive sensor in a case where the magnetosensitive sensor is directly mounted on the electronic circuit board. With respect to such magnetic field disturbance, various countermeasures are taken, but mounting of some kind of separate coil or the like is necessary. For example, in JP2004-158612A (Reference 1) described below, a magnetic field canceler is proposed which is configured so as to cancel magnetic field disturbance using a sensor which detects magnetic field disturbance, a coil which cancels magnetic field disturbance, and a power source which outputs current to the coil with respect to magnetic field disturbance in the periphery of the magnetic sensor. In addition, in JP2012-34149A (Reference 2) below, a power source line filter is proposed which has a coil where two electric wires are wound around a toroidal magnetic body core in directions which are opposite to one another, cancels magnetic flux which is generated at the coil inside the magnetic body core by insertion inside a closed circuit, and is set such that leakage of magnetic flux from the coil is not generated.

Here, a linear motion mechanism which has a nut member and a rod which the nut member is screwed on, and which converts rotary motion of the nut member to linear motion of the rod is known as a typical linear motion mechanism, and a displacement detection device which detects displacement in the axial direction of the rod is known. For example, a device of various aspects is known as a rear wheel steering apparatus which is configured by a portion of a four-wheel steering system (4WS) for a vehicle, but a basic configuration consists of "a rod which is linked to rear wheels of the vehicle, a housing which supports the rod and is fixed to a chassis of the vehicle, and a motor which is accommodated in the housing and drives the rod that is to steer the rear wheels" as described in Japanese Patent No. 5098242A (Reference 3) below, and a linear motion mechanism is used as a driving mechanism for the rod. In Japanese Patent No. 3601170A (Reference 4) below according to similar wheel steering apparatus, a rear wheel steering angle sensor is included which detects movement of a rack shaft as a means for detecting the absolute steering angle of the rear wheels, which corresponds to the displacement detection device above.

In Reference 1 above, the device increases in size and costs increase due to the additional components which configure the magnetic field canceler. In addition, in Reference 2 above, since magnetic field disturbance is canceled inside a toroidal core, inductance of the coil is reduced. Accordingly, in a case where the magnetic field disturbance countermeasure coil is also utilized as a noise filter, the original noise countermeasure effect is reduced. For example, since the noise countermeasure coil is mounted on the electronic circuit board which includes a power supply circuit which is provided in the displacement detection device and rear wheel steering apparatus above, it is considered that the noise countermeasure coil is also utilized in the magnetic field disturbance countermeasure, but since similar to typical noise filters a single coil is used as the noise countermeasure coil, it is not possible to apply the technique described in Reference 2 above without change. Ultimately, a separate magnetic field disturbance countermeasure coil is inevitably added and it increases the size of the device.

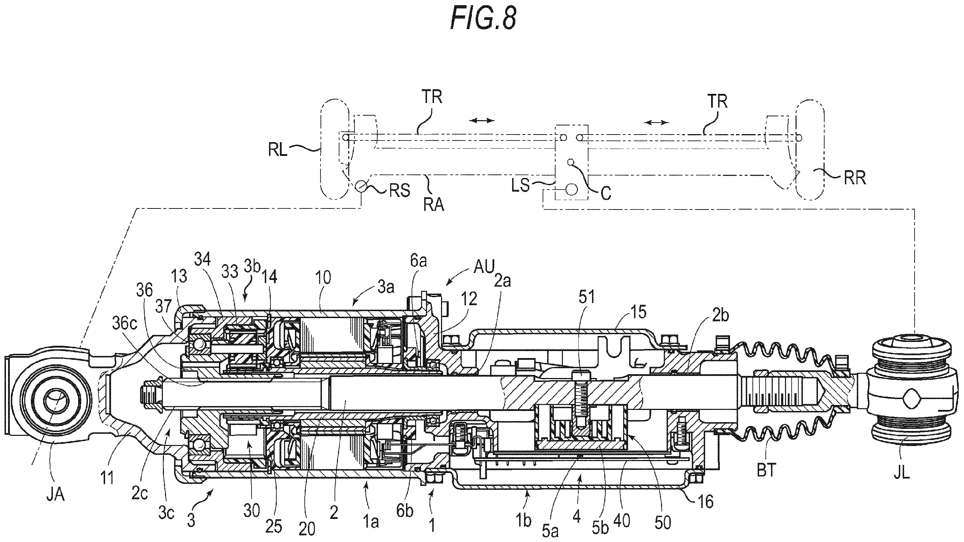

Meanwhile, Reference 4 above describes the rear wheel steering angle sensor having a Hall IC, and a signal which indicates a steering position being output according to the amount of movement of a permanent magnet which is mounted on a rack shaft, and discloses "a rear wheel steering angle sensor 21 is arranged on a board 31 which is illustrated in Fig. 8" (paragraph [0036]), but the board carries out "management of a gap between the rear wheel steering angle sensor 21 and a permanent magnet 21 a" (described in paragraph [0037]), and does not correspond to the electronic circuit board on which a plurality of elements are mounted. Typically, since a degree of rigidity where it is possible for the electronic circuit board to appropriately hold the sensor on the electronic circuit board is not obtained, mounting of a linear sensor is not carried out. Accordingly, in Reference 4, a servo unit in which the rear wheel steering angle sensor is mounted is formed as a separate body from an electronic control unit, and even though integral formation is also suggested, it has not yet been possible to conceive of arranging the rear wheel steering angle sensor inside the electronic control unit.

Here, in the wheel steering apparatus described in Reference 3 above, a motor housing and a speed reduction mechanism housing are screwed, and furthermore, since the speed reduction mechanism housing and a cover are fastened by a lock nut and the displacement detection device is additionally mounted thereto, this causes, not only an increase in the number of components, but also a cost increase due to difficulty in assembly. The document US 6201326 B1 describes an electronic circuit board on which two Hall sensors and a pair of choke coils with parallel coil axes are mounted.

### SUMMARY

Thus, a need exists for a sensor mounting board on which a plurality of elements and a sensor are mounted on an electronic circuit board, in which it is possible to appropriately reduce magnetic field disturbance with respect to the sensor.

This object is solved by an electronic circuit board according to the patent claim 1. An aspect of this disclosure is configured as a sensor mounting board being the electronic circuit board on which a plurality of elements and a sensor are mounted, which includes a pair of choke coils or choke coil elements on which coils are wound, in which the orientations of a magnetic field on each coil axis are in a reverse orientation to one another, the pair of choke coils are arranged such that the respective coil axes are parallel to one another and perpendicular to the electronic circuit board, a sensor is arranged on a line which is arranged in a manner such that a distance between any point on the line and one of the two axes and a distance between said point on the line and the other of the two axes are equal to each other, and a plurality of elements and the sensor are mounted on an electronic circuit board. It is preferable that the sensor mounting substrate includes a capacitor which is arranged between the pair of choke coils and the sensor, the capacitor and the pair of choke coils configuring a noise filter.

The aspect of this disclosure is configured as described above and exhibits the following effects. That is, since the sensor mounting board is configured such that the pair of choke coils on which the coils are wound are included, the orientations of the magnetic field on each coil axis are in a reverse direction to one another, the pair of choke coils are arranged such that the respective coil axes are parallel to one another perpendicular to the electronic circuit board, and the sensor is arranged on a line which is arranged in a manner that a distance between the line and one of the two axes and a distance between the line and the other of the two axes are equal to each other, and since the directions of magnetic field vectors of the choke coils are reverse orientations, the magnetic fields cancel one another out and it is possible to appropriately reduce magnetic field disturbance with respect to the sensor. Accordingly, it is possible to configure a noise filter using a pair of choke coils (and a capacitor) without including a separate magnetic field disturbance countermeasure coil, and it is possible to maintain the noise filter function while reducing magnetic field disturbance by space saving. Furthermore, even if a capacitor is configured to be arranged between the pair of choke coils and the sensor, it is possible to maintain the noise filter function while reducing magnetic field disturbance.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a planar diagram of an electronic circuit board of an embodiment disclosed here;
Fig. 2 is a side surface diagram of an electronic circuit board of an embodiment disclosed here;
Fig. 3 is a planar diagram illustrating a magnetic field density of a simulation effect of magnetic field disturbance with respect to an embodiment disclosed here;
Fig. 4 is a cross-sectional diagram illustrating an embodiment disclosed here of a linear motion mechanism and a displacement detection device;
Fig. 5 is a cross-sectional diagram of a casing which is provided in a linear motion mechanism and a displacement detection device of an embodiment disclosed here;
Fig. 6 is a perspective diagram of a casing which is provided in a linear motion mechanism of an embodiment disclosed here;
Fig. 7 is a planar diagram of a casing and a magnet block which are provided in a linear motion mechanism of an embodiment disclosed here;
Fig. 8 is a cross-sectional diagram illustrating the entire configuration of a rear wheel steering apparatus of an embodiment disclosed here;
Fig. 9 is a cross-sectional diagram illustrating an enlarged actuator portion which is provided in the rear wheel steering apparatus of an embodiment disclosed here; and
Fig. 10 is a cross-sectional diagram illustrating an enlarged controller portion which is provided in the rear wheel steering apparatus of an embodiment disclosed here.

### DETAILED DESCRIPTION

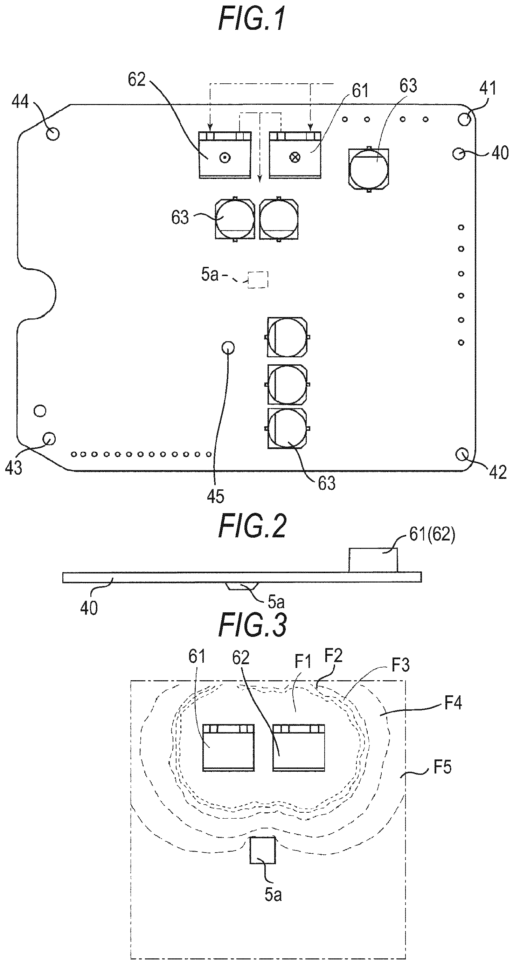

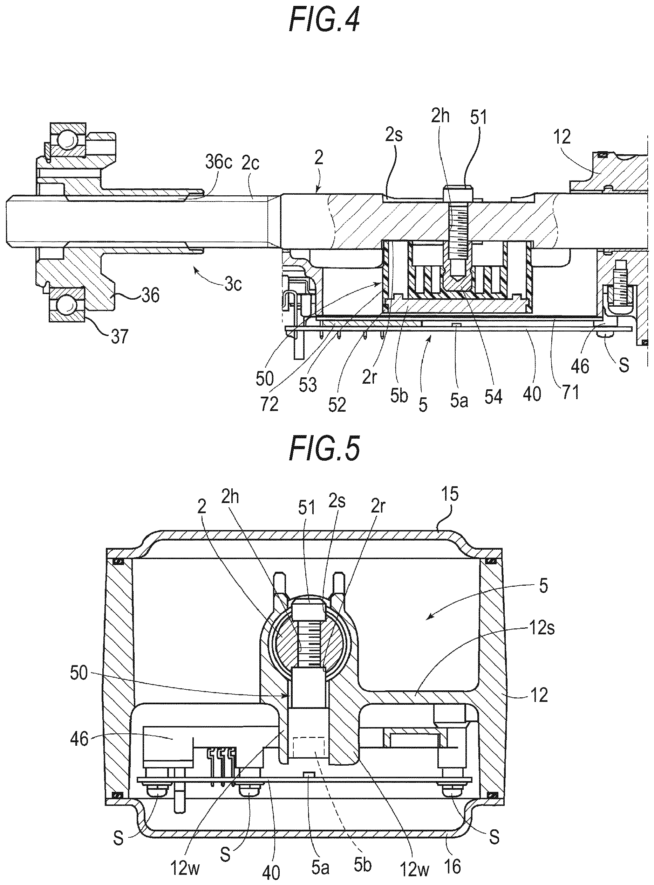

Relating to an embodiment disclosed here, first, a sensor mounting board will be described below with reference to Fig. 1 to Fig. 3. The sensor mounting board of the embodiment disclosed here is provided in a displacement detection device which will be described later with reference to Fig. 4 to Fig. 7, and along with a plurality of elements (a portion of which are indicated in 61 to 63 in Fig. 1), a displacement sensor 5a is mounted on an electronic circuit board 40 as an aspect of a sensor which is an object of this disclosure. The displacement sensor 5a of the embodiment disclosed here, for example, is configured by a magnetic vector sensor, and is configured so as to detect a change in magnetic flux of a permanent magnet (illustrated by 5b in Fig. 4, but which will be described later).

As indicated by the broken line in Fig. 1, the displacement sensor 5a is arranged on a surface (a rear surface in Fig. 1) on one side of the electronic circuit board 40, and a pair of choke coils 61 and 62 on which coils are wound are arranged on a surface (a front surface in Fig. 1) on the opposite side. The positional relationship between the displacement sensor 5a and the choke coils 61 and 62 is such that the orientation of a magnetic fields on the coil axes of the choke coils 61 and 62 are in a reverse orientation to one another, the pair of choke coils 61 and 62 are arranged such that the coil axes of the choke coils 61 and 62 are parallel to one another and perpendicular to the electronic circuit board 40, and the displacement sensor 5a is arranged on a line which is arranged in a manner such that a distance between any point on the line and one of the two axes and a distance between said point on the line and the other of the two axes are equal to each other.

Furthermore, in the embodiment disclosed here, as shown in Fig. 1, two capacitors are included which are arranged on the electronic circuit board 40 between the choke coils 61 an 62 and the displacement sensor 5a, the plurality of capacitors (represented by 63) are mounted, and an LC circuit noise filter is configured by the capacitor 63 and the choke coils 61 and 62. Here, since the noise filter has a typical configuration similar to conventional ones, illustration of a circuit diagram thereof is omitted. In addition, since there is no direct relationship with this disclosure, illustration of other elements thereof are also omitted.

As described above, since the choke coils 61 and 62 are arranged such that the respective coil axes are parallel to one another perpendicular to the electronic circuit board 40, the magnetic fields cancel one another out since the directions of magnetic field vectors of the choke coils 61 and 62 are reverse orientations (reverse direction to one another with respect to the paper surface as indicated by the symbols in each element of each direction in Fig. 1) due to supply of different currents with respect to the winding direction of the coils (the energizing direction is indicated in Fig. 1 by an arrow of a chain double-dashed line). As a result, it is possible to substantially reduce the density of magnetic field disturbance with respect to the displacement sensor 5a without impairing the filter function. In other words, it is possible to maintain the noise filter function while reducing magnetic field disturbance by space saving.

Here, the choke coils 61 and 62 are independent coils and there is magnetic field disturbance due to leakage of magnetic flux, therefore, since inductance of each coil is not reduced even in a case where magnetic field disturbance is canceled, it is possible to simultaneously reduce a noise countermeasure and magnetic field disturbance. In other words, without limiting the noise countermeasure to using the magnetic field disturbance canceling configuration above, in addition, the circuit configuration of the coils may be either of series or parallel and it is possible to adjust an inductance value and a permissible current value.

Thus, magnetic field disturbance simulation is carried out on the result according to the configuration above which is shown in Fig. 1 and Fig. 2, and as shown in Fig. 3, the density of the magnetic field (disturbance) reduces from a region F1 to a region F5 which are enclosed by broken lines, and the magnetic field disturbance near the displacement sensor 5a (the region F5 and the like) confirms that the extent to which sensor precision is not influenced is reduced. Here, the configuration above is not limited to the displacement sensor 5a and is able to be applied to various magnetosensitive sensors. In addition, the coils may be the same, and the type is not limited.

Next, an embodiment disclosed here of a linear motion mechanism and a displacement detection device will be described with reference to Fig. 4 to Fig. 7. In Fig. 4, a linear motion mechanism 3c has a nut member 36 which moves by rotating and a rod 2 which the nut member 36 is screwed on, and which converts rotary motion of the nut member 36 to linear motion of the rod 2, and is referred to as a screw mechanism. A displacement detection device 5 of an embodiment disclosed here detects displacement in the axial direction of the rod 2, and therefore includes the displacement sensor 5a and a permanent magnet 5b, and the permanent magnet 5b is held inside a magnet block 50. The displacement sensor 5a is configured by a magnetic vector sensor in the manner described above, is mounted in a central section (a position which is indicated in Fig. 1) of the electronic circuit board 40 in a range which opposes a transfer path of the permanent magnet 5b and is configured so as to detect a change in magnetic flux of the permanent magnet 5b. Here, the linear motion mechanism 3c is mounted on a rear wheel steering apparatus which will be described later, the nut member 36 is supported on a bearing 37 so as to be able to rotate, and the rod 2 is mounted so as to be inserted into the casing 12.

As shown in Fig. 4 and Fig. 5, long grooves (substantially rectangular concave sections) 2r and 2s with long dimensions in the axial direction are formed on either side surface of the rod 2, and a through hole 2h is formed which passes through both long grooves. Thus, the magnet block 50 is arranged in one long groove 2r, a bolt 51 is inserted into the through hole 2h from the long groove 2s on the opposite side and a nut 54 is screwed thereon, and the magnet block 50 is configured so as to be fixed to the rod 2.

Meanwhile, the electronic circuit board 40 is configured as shown in Fig. 1 and Fig. 2, and the displacement sensor 5a is arranged in the central section of the electronic circuit board 40 (in Fig. 4 and Fig. 5 illustration of the choke coils 61 and 62 and the like are omitted). The electronic circuit board 40 is formed with screw holes 41 to 45 as shown in Fig. 1, screws which are as shown in Fig. 4 and Fig. 5 (represented by S) are inserted into the screw holes 41 to 45, and the electronic circuit board 40 is fixed to a support board 46 by means of a predetermined gap. In particular, the screw hole 45 is included near the displacement sensor 5a, and since in addition to the screw holes 41 to 44 at four corners, the electronic circuit board 40 is fixed to the support board 46 using screws also at the position of the screw hole 45, the displacement sensor 5a is supported in a stabilized state.

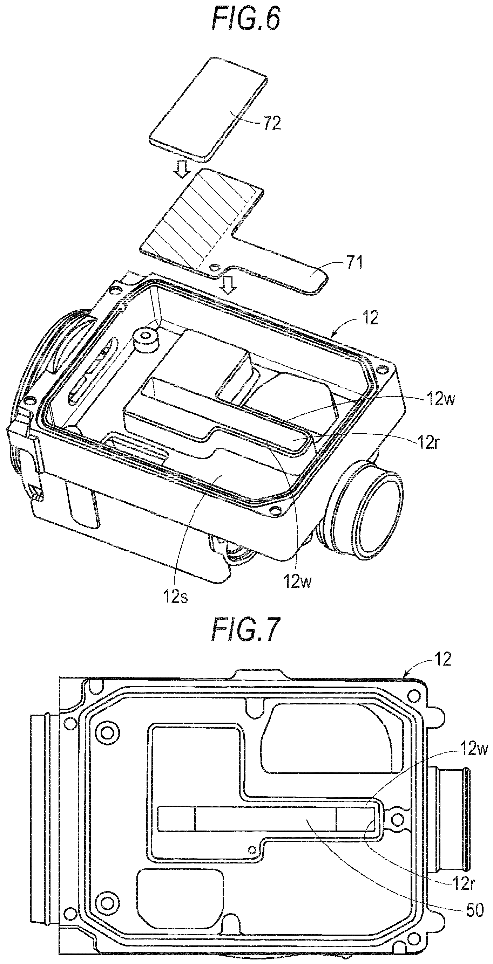

As shown in Fig. 5 and Fig. 6, a support section 12s is formed inside the casing 12, and a pair of vertical wall sections 12w and 12w are formed parallel to the axis of the rod 2 (which is inserted into the casing 12). The magnet block 50 is fitted between the vertical wall sections 12w and 12w and the bolt 51 is inserted into the through hole 2h of the rod 2 and the nut 54 (Fig. 4) is screwed on. Thus, as shown in Fig. 7, the rod 2 is supported so as not to rotate with respect to the vertical wall sections 12w and 12w, thus the casing 12 by the magnet block 50.

Furthermore, as shown in Fig. 4 and Fig. 6, a heat transfer plate which is formed from a material with low heat resistance (with good heat conductivity), for example an aluminum plate 71, and a heat-radiating sheet 72 which is formed from heat-radiating material are disposed inside the casing 12. That is, the aluminum plate 71 is fixed to a casing 12 (for example, screw fixed), and the heat-radiating sheet 72 is arranged so as to be interposed between the aluminum plate 71 and the electronic circuit board 40, such that an opening 12r which is formed by the vertical wall sections 12w and 12w above is covered. The aluminum plate 71 and the heat-radiating sheet 72 are arranged inside the casing 12 as indicated by the white arrow in Fig. 6, and the heat-radiating sheet 72 is crimped in a region which is indicated by diagonal lines on the aluminum plate 71 in Fig. 6.

It is possible to also mount heat-generating components (for example, an element for driving a motor) on the electronic circuit board 40 at a position which opposes the opening 12r by disposing the aluminum plate 71 and the heat-radiating sheet 72 above. In addition, since abrasion powder which is able to be generated accompanying sliding of the magnet block 50 (in the left and right direction in Fig. 4 and Fig. 7) is obstructed by the aluminum plate 71, it is not necessary to be concerned regarding abrasion of the electronic circuit board 40. As a result, degree of design freedom of the electronic circuit board 40 is great and it is possible to reduce costs. Here, other signs which are shown in Fig. 4 to Fig. 7 are the same as the signs for the configuration components of the rear wheel steering apparatus which will be described later, and will be described later.

Next, an embodiment disclosed here of a rear wheel steering apparatus which includes the displacement detection device 5 with the configuration above will be described with reference to Fig. 8 to Fig. 10. The rear wheel steering apparatus of the embodiment disclosed here is a configuration of a portion of a four-wheel steering system (4WS), but due to being conventional a front wheel steering apparatus is omitted. In addition, there are various aspects in the suspension mechanism which supports rear wheels of a vehicle, but the embodiment disclosed here in configured as indicated by the chain double-dashed line in Fig. 8, and an actuator unit AU which is configured by the rear wheel steering apparatus of the embodiment disclosed here is interposed between a support section RS of a rear axle RA which supports rear wheels RL and RR of the vehicle and a link LS which oscillates a center of oscillation C which is axially supported on the rear axle RA to the center, and thereby is driven so as to expand and contract between the support section RS and the link LS, and the rear wheels RL and RR are steered via tie rods TR and TR according to oscillation of the link LS.

The actuator unit AU is configured so as to be supported such that it is possible for the rod 2 in the housing 1 to move in the axial direction (linear motion), an end section thereof is linked to the link LS via a ball joint JL, the housing 1 is linked to the support section RS via a ball joint JA, the rod 2 is driven by the actuator 3, and the actuator unit AU is driven so as to expand and contract between the support section RS of the rear axle RA and the link LS. In detail, an electric motor 3a which is configured by the actuator 3 is configured as to be controlled by a controller 4, rotation output from the electric motor 3a is reduced by a speed reduction mechanism 3b and then converted to linear motion of the rod 2 via the linear motion mechanism 3c described above. Here, the electric motor 3a in an embodiment disclosed here is configured by a brushless motor.

In the embodiment disclosed here, the housing 1 is configured so as to be broadly classified into a housing 1a where main configuration components of the actuator 3 (the electric motor 3a and the like) are built in and a housing 1b where main configuration components of the controller 4 (the electronic circuit board 40 and the like) are built in, a link cover 11 is joined to the cylindrical body 10 which configures the housing 1a, the casing 12 which configures the housing 1b and has an opening section in the vertical and axial directions is joined, and covers 15 and 16 are joined to the upper and lower opening sections of the casing 12. In an embodiment of this disclosure, the housing 1 is made from metal, the link cover 11 and the casing 12 are made from aluminum, and the cylindrical body 10 and the covers 15 and 16 are made from iron.

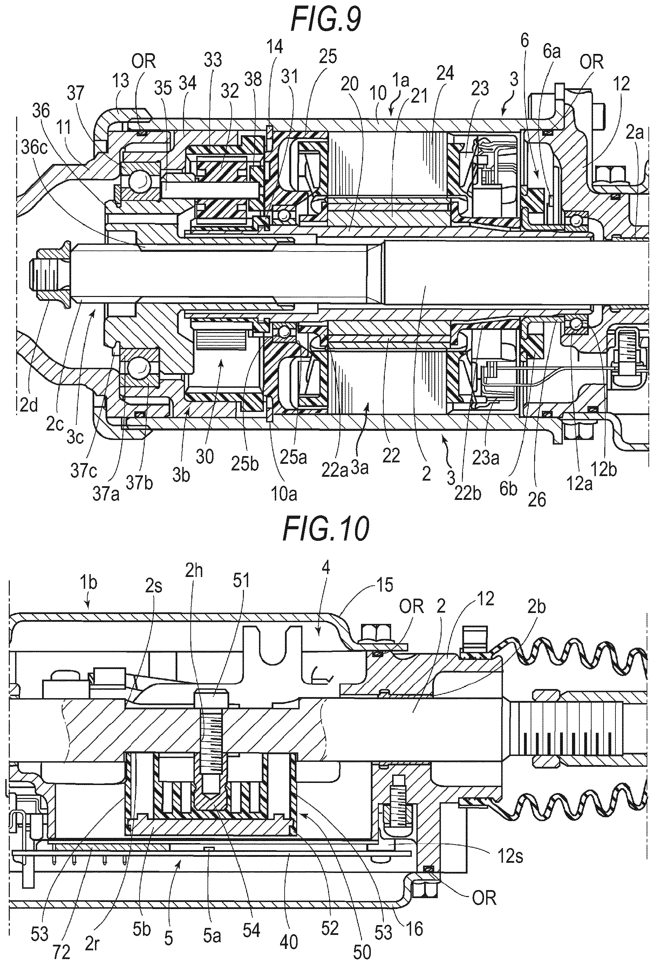

The actuator 3 is configured as shown enlarged in Fig. 9, and is pressed into and fixed inside the cylindrical body 10 in a state where a coil 23 is wound on a stator 24. The output shaft of the electric motor 3a is configured by a hollow rotary shaft 20, and the hollow rotary shaft 20 is supported so as to be able to rotate with respect to an inner radius section 25a of an annular motor cover 25 which is inserted inside the cylindrical body 10 and an annular groove 12a which is formed in the casing 12 via bearings 25b and 12b respectively. A core 21 which configures a rotor of the electric motor 3a is pressed into and fixed in the intermediate section in the axial direction of the hollow rotary shaft 20, and a permanent magnet 22 is disposed uniformly in the circumferential direction of the core 21.

Furthermore, the rod 2 is arranged on the same axis inside the hollow rotary shaft 20, is supported such that it is possible for the rod 2 in the housing 1 to move in the axial direction (linear motion), and the rod 2 is supported so as not to rotate with respect to the housing 1. Here, bushes 2a and 2b are interposed between the rod 2 and the support section of the casing 12, but the bushes 2a and 2b reduce sliding resistance in order to perform movement smoothly in the axial direction of the rod 2. That is, since the embodiment of this disclosure is a cantilever support expansion and contraction mechanism, a function as a bearing in a movement mechanism in the axial direction of both end supports is not demanded in the bushes 2a and 2b.

The speed reduction mechanism 3b of the embodiment of this disclosure is configured by a planetary gear mechanism 30, a sun gear 31 of an external tooth gear is integrally coupled with the hollow rotary shaft 20, and is supported so as to be able to rotate along with the hollow rotary shaft 20. In addition, a ring gear 33 of an internal tooth gear is fixed to a holder 34 of a holding member with a cylindrical shape, and a planetary gear 32 of the external tooth gear meshes with the sun gear 31 and the ring gear 33 and is disposed so as to rotate around the sun gear 31. Then, the planetary gear 32 is set as a carrier which is supported so as to be able to rotate via a pin 35, and is supported by the nut member 36 so as to be able to be rotated via the bearing 37 with respect to the holder 34. The bearing 37 is a ball bearing, an inner ring 37a thereof is fitted to the nut member 36, an outer ring 37b thereof is fitted to the holder 34, and the bearing 37 is held in the nut member 36 using a C shaped spacer 37c.

In an embodiment of this disclosure, the holder 34 and the pin 35 are made from metal (for example, iron), but the sun gear 31, the planetary gear 32, and the ring gear 33 are made from a synthetic resin, and the sun gear 31 is integrally formed in the hollow rotary shaft 20 of metal. Then, the ring gear 33 is supported so as not to rotate with respect to the holder 34, and the holder 34 is supported so as not to rotate with respect to the cylindrical body 10. That is, as shown in Fig. 9, a snap ring 14 is held in an annular groove 10a which is formed inside the cylindrical body 10, in a state where the outer ring 37b of the bearing 37 and the holder 34 are interposed between an annular side surface of the snap ring 14 and an annular opening end surface of the link cover 11, an annular lock nut 13 is screwed on a screw section which is formed at an opening end at the speed reduction mechanism 3b side (the left side in Fig. 9) of the cylindrical body 10, and the link cover 11 is fastened to the cylindrical body 10. Thus, the outer ring 37b of the bearing 37 and the holder 34 are interposed firmly between the snap ring 14 and the link cover 11 due to the pressing force in the axial direction which is generated accompanying screwing of the lock nut 13, and as a result, the holder 34 is held so as not to rotate with respect to the cylindrical body 10.

Then, a male screw section 2c in which a trapezoidal screw is formed along a predetermined length in the axial direction on the outer circumferential surface of an end section of the rod 2 and a female screw section 36c which is formed on the inner circumferential surface of the nut member 36 are arranged so as to screw, and the linear motion mechanism 3c is configured by the nut member 36 and the rod 2. Here, a nut 2d is screwed on a leading end of the male screw section 2c for fall-off prevention of the rod 2. Since the rod 2 is supported as described above, the load in the axial direction which it is possible to impart on the rod 2 is absorbed by the cylindrical body 10 and the link cover 11 via the nut member 36, the bearing 37, the holder 34, and the snap ring 14.

Meanwhile, as shown in Fig. 10, as the controller 4, the electronic circuit board 40 which configures the electronic control device (not shown in the drawings) in which a plurality of elements, which include the choke coils 61, 62, (omitted from the illustration in Fig. 10) and the like, are mounted, the displacement sensor 5a which configures the displacement detection device 5 described above, and the magnet block 50 are accommodated inside the housing 1 b. As described above, the displacement sensor 5a is directly supported on the electronic circuit board 40, but it is possible to appropriately reduce magnetic field disturbance using the choke coils 61 and 62, and it is possible to reliably detect a change in magnetic flux of the permanent magnet 5b. Here, since the displacement detection device 5 illustrated in Fig. 10 is configured similarly to Fig. 4 to Fig. 7, description is omitted here, but the magnet block 50 has a function in which displacement in the axial direction is detected at the time of linear motion of the rod 2, and has a function of obstructing rotation of the rod 2.

Thus, in the actuator 3 of the embodiment of this disclosure, when the hollow rotary shaft 20 is driven so as rotate by the electric motor 3a, the rotation output thereof is reduced by the speed reduction mechanism 3b of the planetary gear mechanism 30 and the nut member 36 is driven so as rotate, furthermore, rotary motion of the nut member 36 is converted to linear motion of the rod 2 by the linear motion mechanism 3c. As a result, a steering angle of the rear wheels is adjusted by driving so as to expand and contract between the support section RS of the rear axle RA and the link LS as described above.

Another aspect of this disclosure is configured as a displacement detection device of a linear motion mechanism which has a nut member and a rod which the nut member is screwed on, which is mounted on a linear motion mechanism that converts rotary motion of the nut member to linear motion of the rod, and which detects displacement in the axial direction of the rod, in which an electronic circuit board on which a plurality of elements are mounted, a permanent magnet which is fixed parallel to the rod, a sensor which is mounted on the electronic circuit board in a range which opposes a transfer path of the permanent magnet and detects a change in magnetic flux of the permanent magnet, and a pair of choke coils on which coils are wound are included, the orientations of a magnetic field on each coil axis are in a reverse orientation to one another, the pair of choke coils are arranged such that the respective coil axes are parallel to one another perpendicular to the electronic circuit board, and the sensor is arranged on a line which is arranged in a manner that a distance between the line and one of the two axes and a distance between the line and the other of the two axes are equal to each other.

The displacement detection device described above exhibits the following effects. Since the displacement detection device for a linear motion mechanism is configured such that the pair of choke coils on which the coils are wound are included, the orientations of the magnetic field on each coil axis are in a reverse orientation to one another, the pair of choke coils are arranged such that the respective coil axes are parallel to one another perpendicular to the electronic circuit board, and the sensor is mounted on the electronic circuit board in a range which opposes a transfer path of the permanent magnet, it is possible to appropriately reduce magnetic field disturbance with respect to the sensor, and since it is possible to reliably detect a change in magnetic flux of the permanent magnet, it is possible to directly support the sensor on the electronic circuit board, a small and lightweight displacement detection device is possible, and it is possible to reduce costs.

The displacement detection device of the linear motion mechanism described above may be configured to include a support board which supports the electronic circuit board by means of a predetermined gap, in which the electronic circuit board is fixed to the support board near to the sensor.

When the support board above is included and the electronic circuit board is fixed to the support board near to the sensor, the displacement detection device of the linear motion mechanism described above exhibits the effect of it being possible to further appropriately support the electronic circuit board.

Still another aspect of this disclosure is configured as a rear wheel steering apparatus for a vehicle which is interposed in a suspension mechanism which supports the rear wheels of the vehicle, and steers the rear wheels, in which a housing which is linked to the suspension mechanism via a first linking member and a second linking member, an electric motor which is accommodated inside a cylindrical body which configures the housing, a speed reduction mechanism which is accommodated inside the cylindrical body and which reduces speed output from the electric motor, a linear motion mechanism which has a nut member which rotates by being linked to the speed reduction mechanism and a rod which the nut member is screwed on and which is linked to the second linking member, and which converts the rotary motion of the nut member to linear motion of the rod, a casing which configures the housing and is fixed to the cylindrical body by being arranged so as to enclose the rod that extends from the cylindrical body, an electronic circuit board which is arranged inside the casing and on which a plurality of elements are mounted, a permanent magnet which is fixed parallel to the rod, a sensor which is mounted on the electronic circuit board in a range which opposes a transfer path of the permanent magnet, and detects a change in magnetic flux of the permanent magnet, and a pair of choke coils on which coils are wound are included, the orientations of a magnetic field on each coil axis are in a reverse orientation to one another, the pair of choke coils are arranged such that the respective coil axes are parallel to one another perpendicular to the electronic circuit board, and the sensor is arranged on a line which is arranged in a manner that a distance between the line and one of the two axes and a distance between the line and the other of the two axes are equal to each other.

The rear wheel steering apparatus for a vehicle described above exhibits the following effects. Since the rear wheel steering apparatus for a vehicle is configured such that the pair of choke coils on which the coils are wound are included, the orientations of a magnetic field on each coil axis are in a reverse orientation to one another, the pair of choke coils are arranged such that the respective coil axes are parallel to one another perpendicular to the electronic circuit board, and the sensor is mounted on the electronic circuit board in a range which opposes a transfer path of the permanent magnet, it is possible to appropriately reduce magnetic field disturbance with respect to the sensor, and since it is possible to reliably detect a change in magnetic flux of the permanent magnet, it is possible to directly support the sensor on the electronic circuit board, a small and lightweight rear wheel steering apparatus is possible, and it is possible to reduce costs of the entire rear wheel steering apparatus.

The rear wheel steering apparatus for a vehicle described above may be configured to include a support board which supports the electronic circuit board by means of a predetermined gap, in which the electronic circuit board is fixed to the support board near to the sensor.

When the support board above is included and the electronic circuit board is fixed to the support board near to the sensor, the displacement detection device of the linear motion mechanism described above exhibits the effect of it being possible to further appropriately support the electronic circuit board.

According to the above-mentioned configuration, the displacement detection device which is mounted on a linear motion mechanism and which detects displacement in the axial direction of the rod, in which the sensor is appropriately mounted on the electronic circuit board, and it is possible to reduce the size and lower costs is obtained. And, the rear wheel steering apparatus for a vehicle which is interposed in a suspension mechanism which supports the rear wheels of the vehicle and which steers the rear wheels, in which the displacement detection device is included and it is possible to lower costs by making assembly easy is obtained.

## Claims

1. An electronic circuit board (40) with a sensor (5a) and a pair of choke coil elements (61, 62) mounted thereon, each choke coil element (61, 62) comprising a coil winding having a coil axis wherein,
- the orientations of the magnetic fields along the two coil axes are in a reverse direction to one another,
- the choke coil elements (61, 62) are arranged such that the respective coil axes are parallel to one another and perpendicular to the electronic circuit board (40),
- the sensor (5a) is arranged on a line which is arranged in a manner such that the distance between any point on the line and one of the two axes and the distance between said point on the line and the other one of the two axes are equal to each other and that
- the magnetic field disturbance caused by the pair of choke coil elements (61, 62) is reduced along said line, and
- a plurality of elements and the sensor (5a) are mounted on the electronic circuit board (40).

2. The sensor mounting board according to claim 1, further comprising:
a capacitor (63) which is arranged between the pair of choke coils and the sensor, the capacitor and the pair of choke coils configuring a noise filter.

## Patentansprüche

1. Elektronische Leiterplatte (40) mit einem Sensor (5a) und einem darauf montierten Paar Drosselspulenelemente (61, 62), wobei jedes Drosselspulenelement (61, 62) eine Spulenwicklung aufweist, welche eine Spulenachse hat, wobei:
- die Orientierungen der magnetischen Felder entlang der beiden Spulenachsen in umgekehrter Richtung zueinander sind,
- die Drosselspulenelemente (61, 62) so angeordnet sind, dass die jeweiligen Spulenachsen parallel zueinander und senkrecht zu der elektronischen Leiterplatte (40) sind,
- der Sensor (5a) auf einer Linie angeordnet ist, welche auf eine Weise angeordnet ist, dass der Abstand zwischen jedem Punkt auf der Linie und einer der beiden Achsen und der Abstand zwischen dem Punkt auf der Linie und der anderen der beiden Achsen gleich zueinander sind, und dass
- die durch das Paar Drosselspulenelemente (61, 62) verursachte Magnetfeldstörung entlang der Linie verringert ist, und
- eine Anzahl von Elementen und der Sensor (5a) auf der elektronischen Leiterplatte (40) montiert sind.

2. Sensormontageplatte nach Anspruch 1, ferner mit einem Kondensator (63), welcher zwischen dem Paar Drosselspulen und dem Sensor angeordnet ist, wobei der Kondensator und die Drosselspulen einen Rauschfilter konfigurieren.

## Revendications

1. Carte de circuit électronique (40) avec un capteur (5a) et une paire d'éléments de bobine d'arrêt (61, 62) montés sur cette dernière, chaque élément de bobine d'arrêt (61, 62) comprenant un enroulement de bobine ayant un axe de bobine, dans laquelle :
les orientations des champs magnétiques le long des deux axes de bobines sont dans une direction inverse l'une par rapport à l'autre,
les éléments de bobine d'arrêt (61, 62) sont agencés de sorte que les axes de bobine respectifs sont parallèles entre eux et perpendiculaires à la carte de circuit électronique (40),
le capteur (5a) est agencé sur une ligne qui est agencée de sorte que la distance entre n'importe quel point sur la ligne et l'un des deux axes et la distance entre ledit point sur la ligne et l'autre des deux axes sont égales entre elles, et que :
la perturbation de champ magnétique provoquée par la paire d'éléments de bobine d'arrêt (61, 62) est réduite le long de ladite ligne, et
une pluralité d'éléments et le capteur (5a) sont montés sur la carte de circuit électronique (40).

2. Carte de montage de capteur selon la revendication 1, comprenant en outre :
un condensateur (63) qui est agencé entre la paire de bobines d'arrêt et le capteur, le condensateur et la paire de bobines d'arrêt configurant un filtre antibruit.
